Europäisches Patentamt

European Patent Office

Office européen des brevets

(11) Publication number: **0 479 821 B1**

# EUROPEAN PATENT SPECIFICATION

(45) Date of publication of patent specification: **28.12.94**   (51) Int. Cl.⁵: **B01D 39/08**

(21) Application number: **90909144.9**

(22) Date of filing: **26.06.90**

(86) International application number:
**PCT/FI90/00167**

(87) International publication number:
**WO 91/00133 (10.01.91 91/02)**

54 **A FILTER RESISTANT TO HIGH TEMPERATURES AND A METHOD FOR MANUFACTURING IT.**

(30) Priority: **30.06.89 FI 893199**

(43) Date of publication of application:
**15.04.92 Bulletin  92/16**

(45) Publication of the grant of the patent:
**28.12.94 Bulletin  94/52**

(84) Designated Contracting States:
**AT BE CH DE DK FR GB LI NL SE**

(56) References cited:
**EP-A- 0 005 923**
**DE-A- 2 422 490**
**FI-A- 880 571**
**SE-B- 439 884**

(73) Proprietor: **SAARIKETTU, Jukka, Elias**
**Kustaa Adolfinkatu 78**
**SF-67200 Kokkola (FI)**

(72) Inventor: **SAARIKETTU, Jukka, Elias**
**Kustaa Adolfinkatu 78**
**SF-67200 Kokkola (FI)**

(74) Representative: **Fiener, Josef et al**
**Patentanwälte Kahler, Käck, Fiener & Sturm**
**P.O. Box 12 49**
**D-87712 Mindelheim (DE)**

**Description**

The invention refers to a filter resistant to high temperatures, and a method for manufacturing it, in which method the filter is formed of a fibre net by securing it to a suitable framework.

Often the temperature resistance of dust filters that are at present used limits the temperature of processes disadvantageously. It is possible to achieve high temperatures by using steel nets, but this does not withstand corrosive substances. Nets of other metals can also be used, but these are quite expensive. The filter must withstand abrasion and pressure impacts, which are used at regular intervals to clean it.

International Patent Application PCT/FI89/20 published on 24.08.89. presents a method of manufacturing an oriented fibre structure, in which it is most advantageous to use a double disc knitting machine, on account of its great manufacturing output. In accordance with this two rows of needles knit loops in different directions, which form lateral channels, into which it is possible to feed reinforcing fibres. A corresponding textile product, the structure of which is similar to that shown in this international application, is known from British application publication 2 121 837.

DE-A-2 422 490 describes a single-sided knitted fabric for use as filter material.

The object of this invention is to create a new type of filter, which withstands pressure impacts and high temperatures, as well as being highly resistant to abrasion, and a method for manufacturing it.

The characteristic features of a filter in accordance with the invention appear in Claim 2, and the features of the method of manufacturing this appear in Claim 1.

The main principle of the invention is to use the oriented fibre structure known from the aforementioned international application publication and fibre materials that are resistant to high temperatures. The filter can also be advantageously made to conduct electricity by adding carbon fibres, which conduct electricity, to the oriented fibres.

In what follows, the invention is illustrated by means of the accompanying example, which depicts the knitted structure applied to a filter.

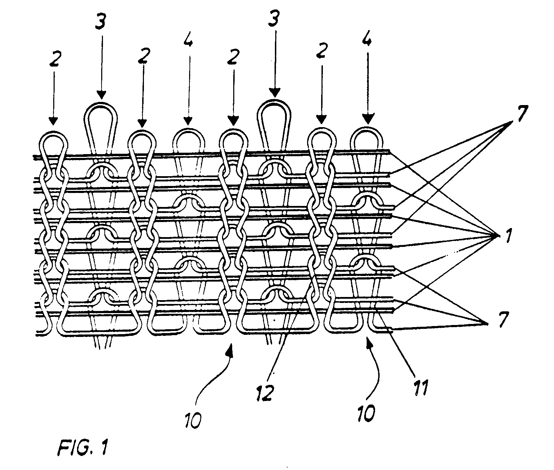

The knitted fabric in Figure 1 is created by a so-called double disc knitting machine, in which there are cylinder needles in the vertical direction and disc needles in the horizontal. Aramid fibres 7, which withstand high temperatures, are used as a loop filament. The needles on the cylinder side are set to knit loops 2 in each feed in different systems. The disc needles, on the contrary, are set to the so- called Interlock setting, when the knitting takes place alternately in each sequential feed. The loops knitted by the disc needles are marked with the reference numbers 3, 4. Reinforcing fibres 1 e.g. aramid fibres are fed on every second system, and they remain in the channels formed by the loops 2, 3, 4 running in different directions. The reinforcing aramid fibres 1 remain transverse in relation to the wales 10 of the fabric. Due to the Interlock setting, the fabric tends to shrink longitudinally, when the fibres 1 become very dense. In this the filter also becomes tight. Nomex® (poly(m-phenyleneiso phtalamide)) fibres can also be used in place of aramid fibres as the reinforcing fibres 1.

As a second example, reference can be made to two trial runs, in which the following materials and machine settings were used.

Example 1:

Surface 25 Tex Nomex®. Infill 2 x 25 Tex Nomex®, every sixth infill thread aramid 142 Tex.

```
                    10              17              10
    System 1.       B       2.      B       3.      A
                    --              --              --
                    k.c.           ·pass            k.c.
                    15                              15


    k.c. = knit close
```

Example 2:

Surface 25 Tex Nomex®. Infill 2 x 25 Nomex®, every sixth infill thread 200 Tex Carbon.

```
Syst.                17          10
    1.pass    2.  A   3.  B    4. pass  5. B      6.  A
    --        --      --          --    --           --
        B       pass      all      A      pass      all
    15                      15
```

In the latter example carbon fibre, which conducts electricity, is used as a component. The carbon fibres are connected to a common electrode, in which case the filter can either be effectively earthed, or else it may be used as part of an electric filter, It is also possible to use two electrodes in such a way that some of the fibres are connected to the first electrode, and the remainder to a second electrode.

It is advantageous to use partly aramid filament fibres and partly spun fibres as the reinforcing fibres 1. The filament fibres provide the fabric with stiffness, and the spun fibres make the filter as dense as desired, i.e. determine the size of penetrating particles.

**Claims**

1. A method for manufacturing a filter resistant to high temperatures, in which the filter is formed of a fibre net by securing it to a suitable framework, characterized in that a double-sided fabric is knitted on a knitting machine equipped with double rows of needles from a fabric that withstands high temperatures, e.g. aramid fibre (7), and a high temperature resistant reinforcing fibre (1) e.g. aramid fibre is fed between loops (2, 3, 4) knitted by needles of two opposite sets, wherein the reinforcing fibre (1) remains in the channels formed by the transverse loops (2, 3, 4) of the knitted structure, after which a piece of this kind of fibre structure is secured to a suitable frame.

2. A filter resistant to high temperatures, which is formed of a net-like fibre structure set in a frame, characterized in that the filter section is formed from double-sided knitted fabric, wherein the main material is aramid fibre (7) resistant to high temperatures and aramid or other corresponding reinforcing fibres (1) are set in the channels formed by the transverse loops (2, 3, 4) of the fabric.

3. A filter in accordance with Claim 2, characterized in that carbon fibres, which are connected to a suitable electrode at the edges of the filter, are used among the reinforcing fibres (1)

4. A filter in accordance with Claims 2 or 3, characterized in that both filament and spun fibres are used as the reinforcing fibres (1)

**Patentansprüche**

1. Verfahren zur Herstellung eines gegen hohe Temperaturen widerstandsfähigen Filters, wobei der Filter aus einem Faserstoff gebildet wird, der an einem geeigneten Rahmenwerk befestigt ist, dadurch gekennzeichnet, daß auf einer Doppelnadel-Strickmaschine ein doppelseitiges Gestrick aus einem Stoff gestrickt wird, der hohen Temperaturen widersteht, z. B. Aramidfaser (7), und eine gegen hohe Temperaturen widerstandsfähige Verstärkungsfaser (1), z. B. Aramidfaser, zwischen Maschen (2, 3, 4) eingebracht wird, die von zwei gegenläufigen Nadelsätzen gestrickt werden, wobei die Verstärkungsfaser (1) in den Maschenkanälen verbleibt, die von den quer verlaufenden Maschen (2, 3, 4) des Gestricks gebildet werden, woraufhin ein Abschnitt mit dieser Art Fadenstruktur an einem geeigneten Rahmen befestigt wird.

2. Gegen hohe Temperaturen widerstandsfähiger Filter, der aus einer netzartigen Fadenstruktur besteht, die in einen Rahmen eingespannt ist, dadurch gekennzeichnet, daß der Filterbereich aus doppelseitig gestricktem Stoff besteht, wobei das Hauptmaterial gegen hohe Temperaturen widerstandsfähige Aramidfaser (7) ist und Aramid oder andere entsprechende Verstärkungsfasern (1) in die Maschenkanäle eingebracht werden, die von den quer verlaufenden Maschen (2, 3, 4) des Gestricks gebildet werden.

**3.** Filter nach Anspruch 2, dadurch gekennzeichnet, daß unter den verwendeten Verstärkungsfasern (1) Kohlefasern sind, die an den Rändern des Filters an eine geeignete Elektrode angeschlossen sind.

**4.** Filter nach Anspruch 2 oder 3, dadurch gekennzeichnet, daß als Verstärkungsfasern (1) sowohl Fasern als auch gesponnene Fäden verwendet werden.

**Revendications**

**1.** Un procédé de fabrication d'un filtre résistant à des températures élevées, dans lequel on réalise le filtre à partir d'un réseau de fibres que l'on fixe à un encadrement approprié, caractérisé en ce que l'on tricote un tissu tricoté à double face sur une machine à tricoter équipée de deux rangées d'aiguilles à partir d'une fibre qui résiste à des températures élevées, par exemple une fibre aramide (7), et l'on engage une fibre de renforcement résistant à des températures élevées (1), par exemple une fibre aramide, entre les boucles (2, 3, 4) tricotées par les aiguilles de deux jeux opposés, dans lequel la fibre de renforcement (1) reste dans les canaux formés par les boucles transversales (2, 3, 4) de la structure tricotée, une pièce de ce type de structure fibreuse étant ensuite fixée à un cadre approprié.

**2.** Un filtre résistant à des températures élevées, qui est formé par un jeu de structure de fibres en réseau, disposé dans un cadre, caractérisé en ce que la section de filtre est formée à partir d'un tissu tricoté à double face, dans lequel le matériau principal est une fibre aramide (7) résistant à des températures élevées et en ce que des fibres de renforcement correspondantes en aramide ou autre (1) sont placées dans les canaux formés par les boucles transversales (2, 3, 4) du tissu.

**3.** Un filtre selon la revendication 2, caractérisé en ce que des fibres de carbone, qui sont reliées à une électrode appropriée aux bords du filtre, sont utilisées parmi les fibres de renforcement (1).

**4.** Un filtre selon les revendications 2 ou 3, caractérisé en ce qu'à la fois des fibres en filament et des fibres filées sont utilisées comme fibres de renforcement (1).

FIG. 1